# EUROPÄISCHE PATENTSCHRIFT

(11) **EP 2 559 514 B1**
(45) Veröffentlichungstag und Bekanntmachung des Hinweises auf die Patenterteilung: **28.12.2016**
(21) Anmeldenummer: 12179872.2
(22) Anmeldetag: 09.08.2012
(51) Int. Cl.: B23K 26/40, C03C 17/06, H05B 6/12

(54) **Verfahren zur Herstellung einer Hausgerätevorrichtung und Hausgerätevorrichtung**
Method for manufacturing a domestic appliance and domestic appliance
Procédé de fabrication d'un appareil électroménager et appareil électroménager

(30) Priorität: 17.08.2011 ES 201131393
(43) Veröffentlichungstag der Anmeldung: 20.02.2013
(73) Patentinhaber: BSH Hausgeräte GmbH, 81739 München (DE)
(72) Erfinder: Alaman Aguilar, Jorge, 50008 Zaragoza (ES); Buñuel Magdalena, Miguel Angel, 50017 Zaragoza (ES); Cuartielles Ruiz, Diego, 50012 Zaragoza (ES); Ester Sola, Francisco Javier, 50001 Zaragoza (ES); Perez Cabeza, Pilar, 50008 Zaragoza (ES); Planas Layunta, Fernando, 50009 Zaragoza (ES); Romeo Velilla, Rosario, 50008 Zaragoza (ES)

(56) Entgegenhaltungen:
- WO-A1-2011/020721
- WO-A1-2011/045738
- US-A- 5 030 551

## Beschreibung

Die Erfindung geht aus von einem Verfahren nach dem Oberbegriff des Anspruchs 1.

Aus der WO 2011/020719 A1 ist ein Verfahren bekannt, bei dem eine Struktur mittels einer Laserbearbeitung in eine metallische Beschichtung eines Grundkörpers eingebracht wird.

Aus der internationalen Patentanmeldung WO 2011 020721 A1 ist bereits ein Verfahren zum Herstellen einer Hausgeräte-Abdeckplatte mit einem Grundkörper aus Glas oder Glaskeramik bekannt, wobei zumindest eine Beschichtung auf wenigstens eine Seite der Hausgeräte-Abdeckplatte aufgebracht wird. Um ein Verfahren zum Herstellen einer flexibel strukturierbaren Hausgeräte-Abdeckplatte und/oder zum präzisen Einarbeiten von Funktions- oder Markierungsbereichen in einer Hausgeräte-Abdeckplatte bereitzustellen, wird vorgeschlagen, dass die metallische Beschichtung in wenigstens einem Funktions- oder Markierungsbereich mit einem Laser nachbearbeitet wird, um wenigstens die optischen Materialeigenschaften in diesem Funktions- oder Markierungsbereich zu verändern.

Die Aufgabe der Erfindung besteht insbesondere darin, ein gattungsgemäßes Verfahren bereitzustellen, welches unter zumindest weitgehender Vermeidung einer Beschädigung eines Grundkörpers ein vorteilhaftes Einbringen einer klaren und detaillierten Struktur in eine an dem Grundkörper angeordnete Schicht ermöglicht. Die Aufgabe wird erfindungsgemäß durch die kennzeichnenden Merkmale des Anspruchs 1 gelöst, während vorteilhafte Ausgestaltungen und Weiterbildungen der Erfindung den Unteransprüchen entnommen werden können.

Die Erfindung geht aus von einem Verfahren zur Herstellung zumindest einer Struktur in wenigstens einer an zumindest einem Seitenteilbereich eines Grundkörpers angeordneten Schicht durch eine Laserbearbeitung.

Die Laserbearbeitung wird mit einem Laserstrahl einer Wellenlänge zwischen 300 nm und 1500 nm durchgeführt. Vorzugsweise wird die Laserbearbeitung mit einem Laserstrahl einer Wellenlänge zwischen 530 nm und 534 nm, insbesondere von 532 nm, und/oder mit einem Laserstrahl einer Wellenlänge zwischen 1062 nm und 1066 nm, insbesondere von 1064 nm, durchgeführt. Unter einer "Struktur" in der an zumindest einem Seitenteilbereich des Grundkörpers angeordneten Schicht soll in diesem Zusammenhang insbesondere eine Ausnehmung in der Schicht oder ein räumlicher Bereich der Schicht verstanden werden, welcher von einem Umgebungsbereich des Bereichs verschiedene optische und/oder elektrische Eigenschaften aufweist und vorzugsweise zumindest teilweise aus einem von einem Material des Umgebungsbereichs verschiedenen Material besteht. Unter einer "Ausnehmung" in der Schicht soll in diesem Zusammenhang insbesondere eine Materialausnehmung verstanden werden, welche sich insbesondere von einer ersten Oberfläche der Schicht zu einer vorzugsweise gegenüberliegenden zweiten Oberfläche der Schicht erstreckt. Vorzugsweise sind die erste Oberfläche und die zweite Oberfläche die beiden größten Oberflächen der Schicht. Vorzugsweise ist ein Material des Grundkörpers zumindest teilweise durchlässig für die Wellenlängen des Laserstrahls. Darunter, dass das Material "zumindest teilweise durchlässig für die Wellenlängen des Laserstrahls" sein soll, soll insbesondere verstanden werden, dass eine Intensität des Laserstrahls im Material um höchstens 90 %, insbesondere um maximal 80 %, vorzugsweise um höchstens 70 % und besonders vorteilhaft um maximal 60 % pro Zentimeter abgeschwächt wird. Vorzugsweise ist der Grundkörper zumindest teilweise aus einer Glaskeramik und/oder einem Borosilikatglas gebildet. Vorzugsweise ist der Grundkörper als eine Grundplatte ausgebildet. Unter einer "Grundplatte" soll hierbei insbesondere ein räumliches Element verstanden werden, welches, in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50 %, vorzugsweise weniger als 25 % und besonders bevorzugt weniger als 10 % einer Erstreckung des räumlichen Elements parallel zur Ebene, insbesondere einer kleinsten Erstreckung des Elements parallel zur Ebene, beträgt.

Unter einer "Schicht" soll insbesondere ein räumliches Element verstanden werden, das an eine Form einer Oberfläche des Grundkörpers, insbesondere der Grundplatte, angepasst ist und insbesondere eine maximale Dicke aufweist, welche kleiner ist als eine minimale Erstreckung des Grundkörpers, insbesondere eine minimale Dicke der Grundplatte. Die maximale Dicke beträgt vorzugsweise zumindest 20 nm. Die maximale Dicke beträgt vorzugsweise höchstens 100 nm. Bei der Schicht kann es sich sowohl um eine einzelne Schicht, insbesondere eine organische Beschichtung oder eine metallische Schicht, vorzugsweise eine metallische Beschichtung, als auch um ein System mehrerer aneinander angeordneter Schichten handeln, insbesondere um eine metallische Schicht, vorzugsweise eine metallische Beschichtung, welche durch eine Schutzschicht, insbesondere eine Farbschicht, geschützt ist. Ferner kann die Schicht insbesondere als eine organische Beschichtung ausgebildet sein. Vorzugsweise weist die metallische Schicht Edelstahl auf. Unter einer "metallischen" Schicht soll insbesondere eine Schicht verstanden werden, welche zumindest eine metallische Eigenschaft aufweist. Die Menge der "metallischen Eigenschaften" umfasst hierbei insbesondere eine elektrische Leitfähigkeit von zumindest 10⁵ S/m bei 27°C, eine Wärmeleitfähigkeit von wenigstens 10 W/m/K bei 27°C und Spiegelglanz. Unter einem "Seitenteilbereich" des Grundkörpers soll in diesem Zusammenhang insbesondere ein Bereich einer Oberfläche des Grundkörpers verstanden werden. Vorzugsweise erstreckt sich der Seitenteilbereich über eine gesamte, in einem montierten Zustand einem Innenraum eines Hausgeräts zugewandte Unterseite des Grundkörpers, insbesondere der Grundplatte. Darunter, dass die Schicht "an dem Seitenteilbereich des Grundkörpers angeordnet ist", soll insbesondere verstanden werden, dass die Schicht an dem Seitenteilbereich anliegt, vorzugsweise unmittelbar. Besonders vorteilhaft ist die Schicht an dem Seitenteilbereich des Grundkörpers befestigt. Vorzugsweise ist die Schicht durch ein Beschichtungsverfahren, insbesondere durch ein Siebdruckverfahren, vorzugsweise durch eine chemische oder physikalische Gasphasenabscheidung und besonders vorteilhaft durch eine Kathodenzerstäubung auf den Seitenteilbereich aufgebracht. Unter einer "Kathodenzerstäubung" soll insbesondere ein Beschichtungsverfahren verstanden werden, bei dem Atome und/oder Moleküle aus einem Festkörpertarget durch Beschuss mit energiereichen Ionen, vorzugsweise Edelgasionen, herausgelöst werden, in die Gasphase übergehen und auf dem zu beschichtenden Werkstück angelagert werden.

Unter einem "Laserstrahl" soll insbesondere ein von einem Laser emittiertes Bündel kohärenter elektromagnetischer Strahlung verstanden werden. Vorzugsweise weist der Laserstrahl eine senkrecht zu einer Strahlungsrichtung ausgerichtete Querschnittsfläche auf, die bei Abwesenheit einer Laseroptikeinheit für jeden Punkt entlang der Strahlungsrichtung nahezu identisch ist. Unter "nahezu identisch" soll insbesondere eine Abweichung von weniger als 1 %, insbesondere von weniger als 0,5 % und besonders vorteilhaft von weniger als 0,1 % pro Meter entlang der Strahlungsrichtung verstanden werden. Unter einer "Querschnittsfläche" des Laserstrahls soll insbesondere eine Fläche senkrecht zu der Strahlungsrichtung des Laserstrahls verstanden werden, durch die zumindest 68,3 %, insbesondere wenigstens 95,5 % und vorzugsweise mindestens 99,7 % einer Strahlungsleistung transportiert werden. Vorzugsweise ist die Querschnittsfläche ein Kreis. Unter einer "Laserbearbeitung" eines Werkstoffs soll in diesem Zusammenhang insbesondere eine Bearbeitung des Werkstoffs durch Einstrahlung eines Laserstrahls verstanden werden. Insbesondere führt die Einstrahlung des Laserstrahls zu einer physikalischen Veränderung, insbesondere einem Verdampfen, und/oder einer chemischen Veränderung, insbesondere einer Oxidation oder Zersetzung, des Werkstoffs. Darunter, dass die Struktur "durch eine Laserbearbeitung" hergestellt ist, soll insbesondere verstanden werden, dass die Herstellung der Struktur zumindest als wesentlichen Schritt die Laserbearbeitung umfasst. Vorzugsweise ist die Laserbearbeitung eine Laserablation. Unter einer "Laserablation" soll in diesem Zusammenhang insbesondere eine Laserbearbeitung verstanden werden, bei der ein durch einen Laser bestrahlter Werkstoff abgetragen, insbesondere verdampft, wird. Vorzugsweise wird der Grundkörper in einem ersten Schritt mit der Schicht beschichtet und in einem zweiten Schritt wird die Schicht mittels der Laserablation stellenweise zur Bildung der Struktur abgetragen.

Durch ein solches Verfahren kann vorteilhaft eine klare und detaillierte Struktur in die Schicht eingebracht werden, insbesondere unter weitgehender Vermeidung einer Beschädigung des Grundkörpers. Ferner kann die Struktur reproduzierbar und vorteilhaft schnell in die Schicht eingebracht werden. Insbesondere kann eine Herstellung der Struktur gegenüber einer Verwendung von Masken während der Beschichtung des Grundkörpers mit der Schicht beschleunigt werden. Ferner wird vorgeschlagen, dass ein diodengepumpter Festkörperlaser eingesetzt wird. Unter einem "Festkörperlaser" soll insbesondere ein Laser verstanden werden, dessen verstärkendes aktives Medium aus einem Festkörper besteht, der in einer bestimmten Konzentration mit laseraktiven Ionen dotiert ist. Unter einem "diodengepumpten Festkörperlaser" soll insbesondere ein Festkörperlaser verstanden werden, bei dem zumindest eine Laserdiode zur Anregung von Elektronen in ein höheres Energieniveau durch elektromagnetische Strahlung vorgesehen ist. Vorzugsweise werden ein Nd:YAG Laser und besonders vorteilhaft ein Nd:YVO4 Laser eingesetzt. Unter einem "Nd:YAG Laser" soll insbesondere ein Festkörperlaser verstanden werden, dessen aktives Medium aus einem mit Neodym dotierten Yttrium-Aluminium-Granat-Kristall besteht. Unter einem "Nd:YVO₄ Laser" soll insbesondere ein Festkörperlaser verstanden werden, dessen aktives Medium aus einem mit Neodym dotierten Yttrium-Orthovanadat-Kristall besteht. Hierdurch kann Bauraum eingespart werden und es kann eine höhere Betriebszuverlässigkeit erreicht werden. Des Weiteren können eine optische Pumpeffizienz und eine Strahlqualität vorteilhaft gesteigert werden. Vorzugsweise wird der Festkörperlaser gepulst betrieben, besonders bevorzugt mittels eines Güteschalters. Hierdurch kann eine höhere Leistungsdichte erzielt werden.

In einer bevorzugten Ausgestaltung des Verfahrens wird vorgeschlagen, dass ein Laser mit einer Spitzenleistung zwischen 25 kW und 90 kW verwendet wird. Vorzugsweise wird ein Laser mit einer Spitzenleistung von 34 kW und/oder 67 kW verwendet. Im Fall eines gepulsten Lasers berechnet sich die Spitzenleistung insbesondere aus einem Quotienten einer pro Puls abgegebenen Energie dividiert durch eine Zeitdauer des Pulses. Hierdurch kann ein vorteilhaft hoher Energieeintrag in kurzer Zeit erreicht werden. Ferner kann eine Herstellung der Struktur vorteilhaft beschleunigt werden.

In dem Verfahren wird ein gepulster Laser mit einer Pulsfrequenz zwischen 10 kHz und 40 kHz verwendet. Vorzugsweise wird ein gepulster Laser mit einer Pulsfrequenz zwischen 20 kHz und 30 kHz verwendet. Hierdurch kann eine vorteilhaft hohe Durchschnittsleistung des Lasers erzielt werden.

Ferner wird vorgeschlagen, dass der Laserstrahl an wenigstens einer Oberfläche der Schicht auf einen Durchmesser zwischen 10 µm und 200 µm fokussiert wird. Vorzugsweise wird der Laserstrahl an der Oberfläche der Schicht auf einen Durchmesser von 15 µm bis 25 µm, insbesondere von 18 µm bis 22 µm und vorzugsweise von 20 µm, oder auf einen Durchmesser von 105 µm bis 115 µm, insbesondere von 108 µm bis 112 µm und vorzugsweise von 110 µm, fokussiert. Vorzugsweise ist die Oberfläche der Schicht eine größte Oberfläche der Schicht. Darunter, dass der Laserstrahl an der Oberfläche der Schicht auf einen Durchmesser "fokussiert wird", soll insbesondere verstanden werden, dass die Querschnittsfläche des Laserstrahls an der Oberfläche den Durchmesser aufweist. Hierdurch kann vorteilhaft eine klare und detaillierte Struktur in die Schicht eingebracht werden. Ferner kann eine Leistungsdichte an der Oberfläche von einigen Gigawatt pro Quadratzentimeter erzielt werden.

Wenn ein senkrechter Abstand zwischen einem Fokus des Laserstrahls und wenigstens einer Oberfläche der Schicht höchstens 4 mm beträgt, kann vorteilhaft ein kleiner Durchmesser des Laserstrahls in der Oberfläche der Schicht erreicht werden. Ferner kann eine Leistungsdichte in dem Grundkörper verkleinert werden. Vorzugsweise beträgt der senkrechte Anstand zwischen dem Fokus und der Oberfläche der Schicht höchstens 2 mm und besonders vorteilhaft 0 mm. Unter einem "Fokus" des Laserstrahls soll insbesondere eine minimale Querschnittsfläche des Laserstrahls verstanden werden. Unter einem "senkrechten Abstand" des Fokus von der Oberfläche der Schicht soll insbesondere eine Länge einer auf oder unter der Oberfläche senkrecht stehenden Strecke von dem Fokus zu der Oberfläche der Schicht verstanden werden.

Ferner wird eine Abtastgeschwindigkeit zwischen 700 mm/s und 2500 mm/s verwendet. Vorzugsweise wird eine Abtastgeschwindigkeit zwischen 900 mm/s und 1500 mm/s verwendet. Unter einer "Abtastgeschwindigkeit" soll in diesem Zusammenhang insbesondere eine Relativgeschwindigkeit zwischen dem Fokus des Laserstrahls und der Schicht verstanden werden. Insbesondere kann bei stationärem Laser die Schicht bewegt werden. Vorzugsweise wird jedoch bei stationärer Schicht der Laser bewegt und/oder der Laserstrahl durch eine Laseroptikeinheit, insbesondere einen Laserscanner, bewegt, insbesondere umgelenkt, und der Fokus des Laserstrahls über die Schicht geführt. Hierdurch kann, insbesondere bei Verwendung eines gepulsten Lasers, eine vorteilhaft dichte Laserbearbeitung erreicht werden, bei der insbesondere zwei benachbarte Laserbearbeitungspunkte überlappungsfrei unmittelbar aneinander grenzen. Unter einem "Laserbearbeitungspunkt" soll hier und im Folgenden insbesondere ein räumlicher Bereich innerhalb der Schicht verstanden werden, in dem durch die Laserbearbeitung eine Strukturänderung induziert und/oder eine Ausnehmung erzeugt wurde. Vorzugsweise weist der Laserbearbeitungspunkt einen Durchmesser von weniger als 1 mm, insbesondere von weniger als 0,75 mm und vorzugsweise von weniger als 0,5 mm auf. Vorzugsweise erstreckt sich der Laserbearbeitungspunkt von der ersten Oberfläche der Schicht zu der vorzugsweise gegenüberliegenden zweiten Oberfläche der Schicht.

In einer weiteren Ausgestaltung des Verfahrens wird vorgeschlagen, dass bei einem flächigen Bearbeiten der Schicht ein Linienabstand zwischen benachbarten Laserlinien eingehalten wird, welcher zumindest im Wesentlichen einem Durchmesser des Laserstrahls an wenigstens einer Oberfläche der Schicht entspricht. Unter einer "Laserlinie" soll in diesem Zusammenhang insbesondere eine Verbindungslinie von Mittelpunkten von zeitlich unmittelbar nacheinander erzeugten Laserbearbeitungspunkten verstanden werden. Unter einem "Linienabstand" soll in diesem Zusammenhang insbesondere ein minimaler Abstand zweier benachbarter Laserlinien verstanden werden. Darunter, dass der Linienabstand "zumindest im Wesentlichen" dem Durchmesser entspricht, soll insbesondere verstanden werden, dass eine relative Abweichung des Linienabstands vom Durchmesser höchstens 10 %, insbesondere maximal 5% und vorzugsweise höchstens 1 % beträgt. Hierdurch kann unter Vermeidung einer Beschädigung des Grundkörpers eine großflächige Struktur erzielt werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

### Es zeigen:

- Fig. 1: ein als Kochfeld ausgebildetes Hausgerät mit einer Hausgerätevorrichtung in einer Draufsicht,
- Fig. 2: einen Teil der Hausgerätevorrichtung in einer nicht maßstabsgetreuen Schnittdarstellung entlang einer Linie II-II in Fig. 1,
- Fig. 3: einen Teil der Hausgerätevorrichtung in einer nicht maßstabsgetreuen, stark vergrößerten Draufsicht und
- Fig. 4: ein Verfahren zur Herstellung der Hausgerätevorrichtung in einer nicht maßstabsgetreuen schematische Darstellung.

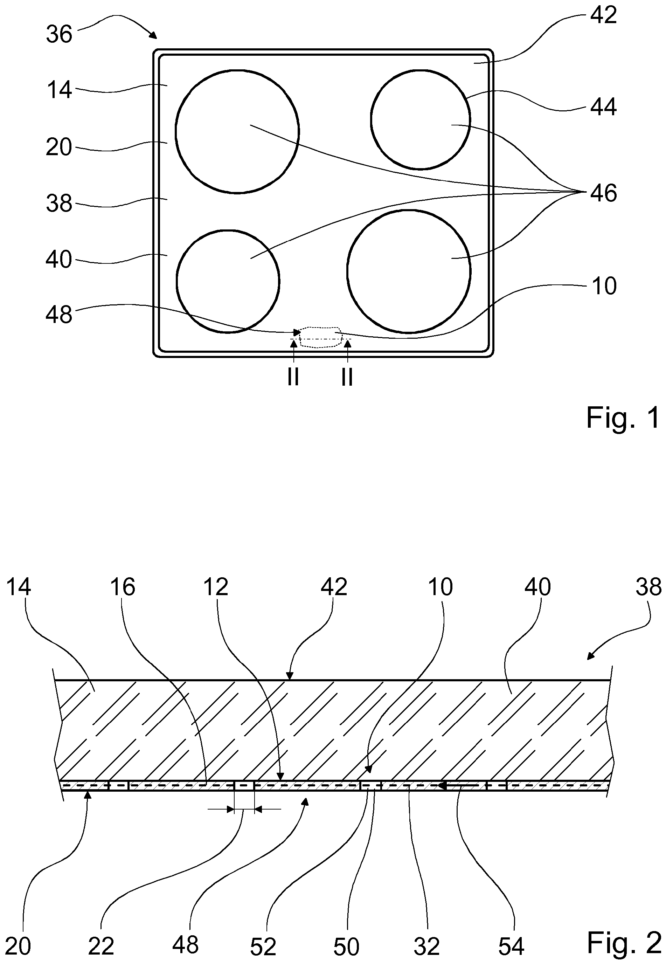

Figur 1 zeigt ein als Kochfeld 36 ausgebildetes Hausgerät mit einer als Kochfeldplatte 38 ausgebildeten Hausgerätevorrichtung. Die Kochfeldplatte 38 umfasst einen als eine Grundplatte 40 ausgebildeten Grundkörper 14. Der Grundkörper 14 besteht aus einer Glaskeramik. Der Grundkörper 14 ist zumindest teilweise transparent. Auf dem Grundkörper 14 sind auf einer Oberseite 42 in bekannter Weise Markierungen 44 aufgebracht. Die Markierungen 44 können mittels eines Siebdruckverfahrens aufgebracht sein. Durch die Markierungen 44 sind Heizzonen 46 gekennzeichnet. Die Kochfeldplatte 38 ist in einem betriebsbereiten Zustand des Kochfelds 36 horizontal angeordnet und zu einem Aufstellen von Gargeschirr auf die Oberseite 42 und die Heizzonen 46 vorgesehen. Unterhalb der Heizzonen 46 sind in Fig. 1 nicht gezeigte Heizelemente angeordnet, welche zu einer Beheizung des auf die entsprechenden Heizzonen 46 aufgestellten Gargeschirrs vorgesehen sind. Bei den Heizelementen kann es sich um beliebige, einem Fachmann als sinnvoll erscheinende Heizelemente handeln, vorzugsweise jedoch um Induktionsheizelemente zur induktiven Beheizung des Gargeschirrs.

Figur 2 zeigt eine nicht maßstabsgetreue Schnittdarstellung der Hausgerätevorrichtung entlang einer Linie II-II in Fig. 1. Der Grundkörper 14 ist auf einer der Oberseite 42 abgewandten, einen Seitenteilbereich 12 bildenden Unterseite mit einer Schicht 16 beschichtet. Die Schicht 16 ist metallisch. Eine Schichtdicke der Schicht 16 beträgt ungefähr 60 nm. Die Schicht 16 ist mittels einer Kathodenzerstäubung auf den Seitenteilbereich 12 des Grundkörpers 14 aufgebracht. In einem Bereich 48 weist die Schicht 16 eine Struktur 10 auf. Bei der Struktur 10 kann es sich um ein beliebiges, einem Fachmann als sinnvoll erscheinendes Element handeln, wie insbesondere ein Dekorelement, beispielsweise ein Markenlogo und/oder einen Schriftzug und/oder eine Markierung eines Bedienelements und/oder eines Anzeigeelements und/oder eine Aussparung eines Bedienelements und/oder eines Anzeigeelements, und/oder ein Funktionselement, wie beispielsweise einen Isolierbereich zwischen zwei elektrisch leitenden Teilstücken der Schicht 16. Die Struktur 10 ist durch Ausnehmungen 50 in der Schicht 16 gebildet. Die Ausnehmungen 50 sind durch eine Laserbearbeitung mit einem gepulsten Laser hergestellt und stellen einzelne Laserbearbeitungspunkte 52 dar.

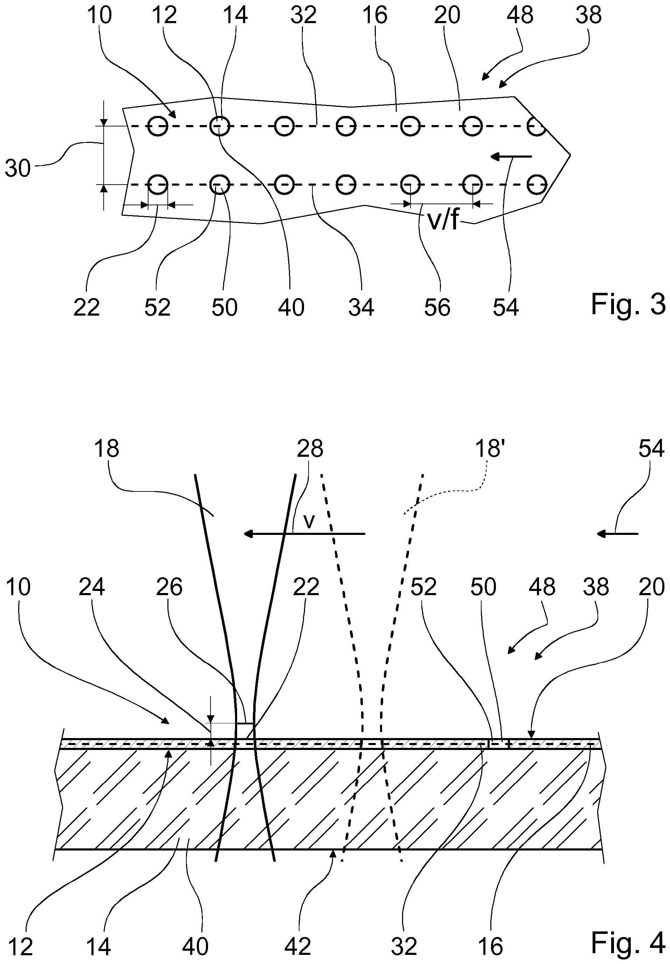

Figur 3 zeigt eine nicht maßstabsgetreue, stark vergrößerte Draufsicht auf die Schicht 16. Die Laserbearbeitungspunkte 52 sind als weitgehend kreisförmige Ausnehmungen 50 ausgebildet. Ein Durchmesser 22 der Laserbearbeitungspunkte 52 beträgt ungefähr 20 µm. Parallel zu einer Laserbearbeitungsrichtung 54 weisen zwei benachbarte Laserbearbeitungspunkte 52 einen Mittelpunktsabstand 56 auf. Parallel zur Laserbearbeitungsrichtung 54 sind die Laserbearbeitungspunkte 52 entlang paralleler Laserlinien 32, 34 angeordnet. Senkrecht zur Laserbearbeitungsrichtung 54 weisen zwei benachbarte Laserlinien 32, 34 einen Linienabstand 30 auf.

Figur 4 zeigt eine nicht maßstabsgetreue schematische Darstellung eines Verfahrens zur Herstellung der Hausgerätevorrichtung. Nach einer Beschichtung des Grundkörpers 14 mit der Schicht 16 wird die Struktur 10 mittels der Laserbearbeitung, und zwar einer Laserablation, in die Schicht 16 eingebracht. Hierzu wird ein Nd:YVO₄-Laser verwendet. Der Laser emittiert in einem Betriebszustand einen Laserstrahl 18 mit einer Wellenlänge λ von 532 nm. Bei dem Laser handelt es sich um einen gepulsten Laser mit Güteschalter. Eine Spitzenleistung Pₘₐₓ des Lasers beträgt 34 kW. Eine Pulslänge des Lasers liegt in einer Größenordnung von einigen Nanosekunden. Der Laser wird mit einer Pulsfrequenz f zwischen 20 kHz und 30 kHz betrieben. Wie in Fig. 4 gezeigt, wird der Laserstrahl 18 mittels einer nicht dargestellten Laseroptikeinheit an einer von dem Grundkörper 14 abgewandten Oberfläche 20 der Schicht 16 auf den Durchmesser 22 von 20 µm fokussiert. Der Laserstrahl 18 trifft in der Darstellung gemäß Fig. 4 von oben auf die Schicht 16. Der Grundkörper 14 ist zumindest teilweise für die Wellenlänge des Laserstrahls 18 transparent. Da ein Fokus 26 des Laserstrahls 18, das heißt ein minimaler Querschnitt des Laserstrahls 18, in einer Umgebung der Schicht 16 liegt, kann eine Energiedeposition im Grundkörper 14 niedrig gehalten und damit eine Beschädigung des Grundkörpers 14 zumindest weitgehend vermieden werden. Ein senkrechter Abstand 24 zwischen dem Fokus 26 und der Oberfläche 20 sollte möglichst klein gehalten werden. In Fig. 4 ist der Abstand 24 lediglich zur Verdeutlichung eingezeichnet. Vorzugsweise ist der Abstand 24 verschwindend klein, so dass ein Durchmesser des Fokus 26 dem Durchmesser 22 von 20 µm entspricht.

Während der Laserbearbeitung wird der Fokus 26 durch die Laseroptikeinheit über die stationäre Oberfläche 20 der Schicht 16 bewegt. Eine Bewegung erfolgt hierbei in Laserbearbeitungsrichtung 54 entlang der Laserlinien 32, 34. In Fig. 4 ist eine Position des Laserstrahls 18 zu einem früheren Zeitpunkt gestrichelt eingezeichnet. Eine Abtastgeschwindigkeit 28 der Bewegung liegt zwischen v = 900 mm/s und v = 1500 mm/s. Durch einen gepulsten Betrieb des Lasers entstehen Laserbearbeitungspunkte 52 mit dem gegenseitigen Mittelpunktsabstand 56 von v/f. Nach Vollendung einer Laserlinie 32 fährt die Laserbearbeitung mit der nächsten Laserlinie 34 fort. Dabei kann die gleiche Laserbearbeitungsrichtung 54 verwendet werden. Vorzugsweise wird jedoch eine zu der Laserbearbeitungsrichtung 54 entgegengesetzte Laserbearbeitungsrichtung verwendet, wodurch eine Bearbeitungsgeschwindigkeit vorteilhaft erhöht werden kann. Der Linienabstand 30 wird so gewählt, dass er im Wesentlichen dem Durchmesser 22 des Laserstrahls 18 an der Oberfläche 20 der Schicht 16 entspricht. Hierdurch kann eine Überlappung von Laserbearbeitungspunkten 52 vermieden werden, wodurch eine Beschädigung des Grundkörpers 14 zumindest weitgehend verhindert werden kann.

Alternativ kann die Laserbearbeitung auch mit der Wellenlänge λ = 1064 nm durchgeführt werden. In diesem Fall beträgt die Spitzenleistung Pₘₐₓ des Lasers 67 kW. Der Durchmesser 22 des Fokus 26 ist in diesem Fall vorteilhaft 110 µm.

**Bezugszeichen**

| | | | |
|---|---|---|---|
| 10 | Struktur | Pₘₐₓ | Spitzenleistung |
| 12 | Seitenteilbereich | v | Abtastgeschwindigkeit |
| 14 | Grundkörper | | |
| 16 | Schicht | | |
| 18 | Laserstrahl | | |
| 20 | Oberfläche | | |
| 22 | Durchmesser | | |
| 24 | Abstand | | |
| 26 | Fokus | | |
| 28 | Abtastgeschwindigkeit | | |
| 30 | Linienabstand | | |
| 32 | Laserlinie | | |
| 34 | Laserlinie | | |
| 36 | Kochfeld | | |
| 38 | Kochfeldplatte | | |
| 40 | Grundplatte | | |
| 42 | Oberseite | | |
| 44 | Markierung | | |
| 46 | Heizzone | | |
| 48 | Bereich | | |
| 50 | Ausnehmung | | |
| 52 | Laserbearbeitungspunkt | | |
| 54 | Laserbearbeitungsrichtung | | |
| 56 | Mittelpunktsabstand | | |
| | | | |
| A | Wellenlänge | | |
| f | Pulsfrequenz | | |

## Patentansprüche

1. Verfahren zur Herstellung zumindest einer Struktur (10) in wenigstens einer an zumindest einem Seitenteilbereich (12) eines Grundkörpers (14) angeordneten Schicht (16) durch eine Laserbearbeitung, wobei die Laserbearbeitung mit einem Laserstrahl (18) einer Wellenlänge (A) zwischen 300 nm und 1500 nm durchgeführt wird, **dadurch gekennzeichnet, dass** ein gepulster Laser mit einer Pulsfrequenz (f) zwischen 10 kHz und 40 kHz verwendet wird, wobei eine Abtastgeschwindigkeit (28) zwischen 700 mm/s und 2500 mm/s verwendet wird.

2. Verfahren nach Anspruch 1, **dadurch gekennzeichnet, dass** ein diodengepumpter Festkörperlaser eingesetzt wird.

3. Verfahren nach Anspruch 1 oder 2, **dadurch gekennzeichnet**, **dass**ein Laser mit einer Spitzenleistung (Pₘₐₓ) zwischen 25 kW und 90 kW verwendet wird.

4. Verfahren nach einem der vorhergehenden Ansprüche, **dadurch gekennzeichnet**, **dass**der Laserstrahl (18) an wenigstens einer Oberfläche (20) der Schicht (16) auf einen Durchmesser (22) zwischen 10 µm und 200 µm fokussiert wird.

5. Verfahren nach einem der vorhergehenden Ansprüche, **dadurch gekennzeichnet, dass** ein senkrechter Abstand (24) zwischen einem Fokus (26) des Laserstrahls (18) und wenigstens einer Oberfläche (20) der Schicht (16) höchstens 4 mm beträgt.

6. Verfahren nach einem der vorhergehenden Ansprüche, **dadurch gekennzeichnet**, **dass**bei einem flächigen Bearbeiten der Schicht (16) ein Linienabstand (30) zwischen benachbarten Laserlinien (32, 34) eingehalten wird, welcher zumindest im Wesentlichen einem Durchmesser (22) des Laserstrahls (18) an wenigstens einer Oberfläche (20) der Schicht (16) entspricht.

## Claims

1. Method for manufacturing at least one structure (10) in at least one layer (16) arranged on at least one side portion (12) of a base body (14) by laser processing, wherein the laser processing is performed using a laser beam (18) with a wavelength (λ) between 300 nm and1500 nm, **characterised in that** a pulsed laser with a pulse frequency (f) between 10 kHz and 40 kHz is used, wherein a scanning speed (28) between 700 mm/s and 2500 mm/s is used.

2. Method according to claim 1, **characterised in that** a diode-pumped solid-state laser is used.

3. Method according to claim 1 or 2, **characterised in that** a laser with a peak power (Pₘₐₓ) between 25 kW and 90 kW is used.

4. Method according to one of the preceding claims, **characterised in that** the laser beam (18) is focused on a diameter (22) between 10 µm and 200 µm on at least one surface (20) of the layer (16).

5. Method according to one of the preceding claims, **characterised in that** a perpendicular distance (24) between a focus (26) of the laser beam (18) and at least one surface (20) of the layer (16) is at most 4 mm.

6. Method according to one of the preceding claims, **characterised in that** in two-dimensional processing of the layer (16) a line interval (30) between adjacent laser lines (32, 34) is maintained, which at least substantially corresponds to a diameter (22) of the laser beam (18) on at least one surface (20) of the layer (16).

## Revendications

1. Procédé de fabrication d'au moins une structure (10) dans au moins une couche (16) d'un bâti (14) disposée sur au moins une zone partielle latérale (12) d'un bâti (14) par traitement au laser, dans lequel le traitement au laser est effectué à l'aide d'un faisceau laser (18) d'une longueur d'onde (λ) située entre 300 nm et 1500 nm, **caractérisé en ce qu'**un laser pulsé d'une fréquence de pulsations (f) située entre 10kHz et 40 kHz est utilisé, dans lequel une vitesse de balayage (28) située entre 700 mm/s et 2500 mm/s est utilisée.

2. Procédé selon la revendication 1, **caractérisé en ce qu'**un laser solide pompé par diode est utilisé.

3. Procédé selon la revendication 1 ou 2, **caractérisé en ce qu'**un laser d'une puissance maximale (Pₘₐₓ) située entre 25 kW et 90 kW est utilisé.

4. Procédé selon l'une des revendications précédentes, **caractérisé en ce que** le faisceau laser (18) est, en au moins une surface (20) de la couche (16), focalisé sur un diamètre (22) situé entre 10 µm et 200 µm.

5. Procédé selon l'une des revendications précédentes, **caractérisé en ce qu'**un écartement vertical (24) entre une focalisation (26) du faisceau laser (18) et au moins une surface (20) de la couche (16) est au maximum de 4 mm.

6. Procédé selon l'une des revendications précédentes, **caractérisé en ce que** lors d'un traitement en plan de la couche (16), un écartement de raie (30) entre des raies de laser voisines (32, 34) est respecté, lequel correspond au moins essentiellement à un diamètre (22) du faisceau laser (18) sur au moins une surface (20) de la couche (16).
